# EUROPEAN PATENT SPECIFICATION

(11) **EP 4 253 498 B1**
(45) Date of publication and mention of the grant of the patent: **18.06.2025**
(21) Application number: 22781344.1
(22) Date of filing: 04.01.2022
(51) Int. Cl.: C09J 175/04, C09J 11/06, C08G 18/10, C08G 18/40, C08G 18/72, C08K 5/54, C08G 18/12, C08G 18/16, C08G 18/20, C08G 18/24, C08G 18/28, C08G 18/32, C08G 18/48, C08G 18/69, C08G 18/76, C08G 18/78, C08G 18/79, C08G 18/80, C08K 5/544, C09J 175/08

(54) **URETHANE-BASED ADHESIVE COMPOSITION**
URETHANBASIERTE KLEBSTOFFZUSAMMENSETZUNG
COMPOSITION ADHÉSIVE À BASE D'URÉTHANE

(30) Priority: 01.04.2021 KR 20210042977
(43) Date of publication of application: 04.10.2023
(73) Proprietor: KCC Corporation, Seoul 06608 (KR)
(72) Inventor: LEE, Jeong Hyun, Ulsan 44262 (KR)
(74) Representative: Newcombe, Christopher David
(86) International application number: PCT/KR2022/000042
(87) International publication number: WO 2022/211223

(56) References cited:
- WO-A1-2019/013917
- CN-A- 111 378 413
- JP-A- 2014 077 094
- KR-A- 20170 029 804
- KR-A- 20170 113 561
- KR-A- 20210 011 304
- KR-A- 20210 011 304
- KR-B1- 102 201 491

## Description

### [Technical Field]

The present invention relates to a urethane-based adhesive composition having excellent adhesiveness, and capable of preparing a cured product having high shear modulus. The invention is set out in the appended set of claims.

### [Background Art]

A general polyurethane resin has a urethane bond in its molecule, and has excellent durability of abrasion, oil resistance and solvent resistance and thus is used in various fields such as an adhesive, an injection molding, an ink, a paint and a foam.

Particularly, such a polyurethane resin may be used not only as an adhesive between metal-metal, but also for adhering a metal to another material, that is, a glass object in the automotive industry. For example, a case of bonding and adhering a substrate such as a windshield, a backlight window and quarter glass to a vehicle body structure may be included.

As such, a urethane-based adhesive used for adhering a vehicle body to glass generally has shear modulus of less than 1.5 MPa, and has had a limit of failing to prevent distortion of a vehicle when an external impact is applied to the vehicle body or in the event of a vehicle collision, or failing to prevent a leaning phenomenon when cornering during high-speed driving.

As an alternative to this, Korean Laid-open Patent Application No. 2019-0003569 (Patent Document 1) discloses a high modulus urethane adhesive composition including a urethane prepolymer resin, a reactive silane, a polyisocyanate having greater than 2 functional values, a catalyst and a carbon black filler. However, an existing urethane adhesive composition as in Patent Document 1 has a limit in increasing modulus, and has a problem in that shear strength decreases when modulus increases. CN111378413 discloses primer-free single-component polyurethane sealant an preparations methods thereof; KR20210011304 discloses a urethane adhesive composition.

Accordingly, there are needs for research and development on a urethane-based adhesive composition capable of improving convenience of a process by allowing solid bonding between a vehicle body painted surface and glass even with no primer treatment on the painted surface due to excellent adhesiveness to the vehicle body painted surface, having excellent workability due to a proper working life, and preparing a cured product having high shear modulus.

### [Disclosure]

### [Technical Problem]

In view of the above, the present invention is directed to providing a urethane-based adhesive composition having excellent adhesiveness to a painted surface, having excellent workability due to a proper working life, and having excellent shear modulus of the prepared cured product.

### [Technical Solution]

One embodiment of the present invention provides a urethane-based adhesive composition as defined in claim 1.

### [Advantageous Effects]

When a urethane-based adhesive composition according to the present invention is used as an adhesive (sealant) for adhering a substrate such as glass to a painted surface of an automotive vehicle body, adhesive strength with the painted surface of the automotive vehicle body is excellent, and a primer coating process on the vehicle body surface as described above can be skipped, which is effective in improving processability.

In addition, the urethane-based adhesive composition can be cured in various temperature ranges and has a proper working life, which can improve workability.

In addition, a coating film prepared from the urethane-based adhesive composition has high shear modulus, and accordingly, safety of a driver can be secured by minimizing distortion of a vehicle when an external impact is applied to the vehicle body, and excellent driving performance can be achieved by preventing a leaning phenomenon when cornering during high-speed driving.

### [Best Mode]

Hereinafter, the present invention will be described in detail.

In the present invention, a functional group value such as a 'content of unreacted NCO (NCO%)', an 'acid value' and a 'hydroxyl group value' may be measured using a method well known in the art, and may be, for example, a value measured using a titration method.

In addition, in the present invention, a "weight-average molecular weight" and a "number-average molecular weight" of a resin may be measured using a method well known in the art, and may be, for example, a value measured using a GPC (gel permeation chromatograph) method.

A urethane-based adhesive composition according to the present invention is a one-component urethane-based adhesive, which is obtained by adding various additives to a urethane prepolymer obtained by a polymerization reaction of a polyol and an isocyanate and forming the result as one component, and may be cured by moisture when exposed to air.

Particularly, the urethane-based adhesive composition of the present invention includes two types of adhesion promoters, that is, a first adhesion promoter and a second adhesion promoter, in the urethane-based prepolymer, and has excellent adhesive strength between different types of materials (glass, organic coating film).

### Urethane-based prepolymer

The urethane-based prepolymer controls mechanical properties of a cured product to be prepared and provides flexibility.

A one-component urethane-based adhesive does not require an additional process before use, and has advantages of being convenient for use and work. However, a one-component urethane-based adhesive may have a reaction occurring between each component in the adhesive during storage or distribution, or have a phase separation occurring due to decreases in compatibility and dispersibility by having different polarity or solubility. As a result, it is difficult to select components included in the one-component urethane-based adhesive, and store and manage the composition prepared by mixing.

In order to address the problems as described above, the present invention uses one type of urethane-based prepolymer prepared from four different types of polyol compounds, specifically three types of polyol compounds and a diol compound, and as a result, improves storage stability by controlling preferred content ranges of the components while improving workability and convenience of work.

Specifically, as for the urethane-based prepolymer, the urethane prepolymer is synthesized using polyols with different molecular weights and functional groups in order to obtain excellent mechanical properties and workability.

As a result, excellent mechanical properties are obtained as the degree of crosslinking between polyol and isocyanate is higher, however, viscosity and storability may become inferior when the degree of crosslinking is too high. Accordingly, by reacting and crosslinking three types of polyol compounds (first polyol compound, second polyol compound, third polyol compound) having different molecular weights or number of functional groups and a polyolefin diol compound, which react with an isocyanate-based compound, in a proper ratio, a urethane-based adhesive with excellent workability and storage stability may be prepared by, while having high modulus, having proper viscosity while maintaining other mechanical properties at an equal or higher level.

### <First polyol compound>

The first polyol compound has a different weight-average molecular weight (Mw) from the second polyol compound, and may specifically have a larger weight-average molecular weight compared to the second polyol compound. The urethane-based prepolymer prepared from three types of polyol compounds with different properties as described above has proper viscosity while having a large molecular weight, and workability may be improved.

Specifically, the first polyol compound may achieve high shear modulus and excellent mechanical properties by increasing the degree of crosslinking of the urethane prepolymer.

Herein, the first polyol compound and the second polyol compound may improve mechanical properties (coating film forming property, strength, durability) of each prepared resin.

The first polyol compound may include 3 to 10 or 3 to 5 hydroxyl groups per molecule. For example, the first polyol compound may be a polyolefin triol or a polyalkylene triol. Specifically, the first polyol compound may have a repeating unit of a main chain having 2 to 10 carbon atoms or a repeating unit of a main chain having 2 to 4 carbon atoms. In other words, the first polyol compound is prepared by polymerization of an olefin, and includes 3 to 10 hydroxyl groups on the end or side chain, and may be polyethylene triol, polypropylene triol or polybutylene triol and may specifically be polyethylene triol or polypropylene triol.

In addition, the first polyol compound may have a weight-average molecular weight larger than the second polyol compound by 1,000 g/mol to 4,000 g/mol, 1,200 g/mol to 3,000 g/mol or 1,500 g/mol to 2,500 g/mol.

Specifically, the first polyol compound may have a weight-average molecular weight (Mw) of 4,500 g/mol to 8,000 g/mol or 4,500 g/mol to 7,000 g/mol. When the weight-average molecular weight of the first polyol compound is less than the above-mentioned range, there is a problem in that mechanical properties decline due to low crosslinking density, and when the weight-average molecular weight is greater than the above-mentioned range, the molecular weight becomes too large, which may cause problems in that workability is reduced by increasing viscosity of the adhesive composition, and storability becomes inferior by reducing dispersibility of an additive, a pigment to be described later.

As the first polyol compound, those having a lower hydroxyl group value (OHv) than the second polyol compound may be used to adjust the molecular weight of the urethane-based prepolymer. For example, the first polyol compound may have a hydroxyl group value (OHv) smaller than the second polyol compound by 10 mgKOH/g to 40 mgKOH/g or 20 mgKOH/g to 35 mgKOH/g.

Specifically, the first polyol compound may have a hydroxyl group value (OHv) of 20 mgKOH/g to 45 mgKOH/g or 25 mgKOH/g to 40 mgKOH/g. When the hydroxyl group value of the first polyol compound is less than the above-mentioned range, there is a problem in that mechanical properties decline, and when the hydroxyl group value is greater than the above-mentioned range, the molecular weight of the prepared urethane-based prepolymer increases, which may cause a problem of inferior workability or storability.

The first polyol compound is used in an amount of 5 parts by weight to 15 parts by weight or 8 parts by weight to 13 parts by weight with respect to 6 parts by weight to 15 parts by weight of the second polyol compound. When the amount of the first polyol compound used in preparing the urethane-based prepolymer is less than or greater than the above-mentioned range, a problem of insufficient hardness and shear modulus of the prepared coating film may occur.

In addition, in the urethane-based prepolymer, the first polyol compound, the second polyol compound, the third polyol compound and the polyolefin diol may be used in a weight ratio of 1:0.6 to 1.2:0.3 to 1.2:0.1 to 0.5.

When the weight ratio of the second polyol compound with respect to the first polyol compound is less than the above-mentioned range, that is, when a small amount of the second polyol compound is used, there is a problem of insufficient hardness and shear modulus of the coating film, and when the weight ratio is greater than the above-mentioned range, that is, when the second polyol compound is used in excess, the molecular weight increases, which may cause a problem of inferior workability and storability.

In addition, when the weight ratio of the third polyol compound with respect to the first polyol compound is less than the above-mentioned range, that is, when a small amount of the third polyol compound is used, the molecular weight increases, resulting in inferior workability and storability, and when the weight ratio is greater than the above-mentioned range, that is, when the third polyol compound is used in excess, a problem of insufficient hardness and shear modulus of the coating film may occur.

When the weight ratio of the polyolefin diol with respect to the first polyol compound is less than the above-mentioned range, that is, when a small amount of the polyolefin diol is used, there is a problem of insufficient hardness and shear modulus, and when the weight ratio is greater than the above-mentioned range, that is, when the polyolefin diol is used in excess, viscosity increases, and a problem of inferior storability may occur.

### <Second polyol compound>

The second polyol compound includes 3 to 10 or 3 to 5 hydroxyl groups per molecule. For example, the second polyol compound may be a polyolefin triol or a polyalkylene triol. Specifically, the second polyol compound may have a repeating unit of a main chain having 2 to 10 carbon atoms or a repeating unit of a main chain having 2 to 4 carbon atoms. In other words, the second polyol compound is polyethylene triol, polypropylene triol or polybutylene triol, and may specifically be polyethylene triol or polypropylene triol.

In addition, as the second polyol compound, those having a smaller weight-average molecular weight than the first polyol compound may be used. For example, the second polyol compound may have a weight-average molecular weight (Mw) of 500 g/mol to 4,300 g/mol or 2,000 g/mol to 4,000 g/mol. When the weight-average molecular weight of the second polyol compound is less than the above-mentioned range, there is a problem in that shear strength and shear modulus are reduced due to a decrease in the degree of crosslinking, and when the weight-average molecular weight is greater than the above-mentioned range, a problem of inferior workability and storability may occur due to an increase in the viscosity.

The second polyol compound may have a larger hydroxyl group value (OHv) than the first polyol compound. For example, the second polyol compound may have a hydroxyl group value (OHv) of 48 mgKOH/g to 70 mgKOH/g or 50 mgKOH/g to 65 mgKOH/g. When the hydroxyl group value of the second polyol compound is less than the above-mentioned range, there is a problem in that shear strength and shear modulus are reduced, and when the hydroxyl group value is greater than the above-mentioned range, a problem of inferior workability and storability may occur due to an increase in the viscosity.

The second polyol compound is used in an amount of 6 parts by weight to 15 parts by weight or 8 parts by weight to 13 parts by weight with respect to 5 parts by weight to 15 parts by weight of the first polyol compound. When the amount of the second polyol compound used in preparing the urethane-based prepolymer is less than the above-mentioned range, there is a problem in that shear strength and shear modulus are reduced, and when the amount is greater than the above-mentioned range, a problem of inferior workability and storability may occur due to an increase in the viscosity.

### <Third polyol compound>

The third polyol compound includes 2 hydroxyl groups (-OH) per molecule and has a repeating unit of a main chain having 2 or 3 carbon atoms, and when prepared including the third polyol, there is an advantage of having excellent workability and mechanical properties by increasing the degree of crosslinking.

Herein, the third polyol compound may provide mechanical properties (coating film forming property, strength, durability) to the prepared resin.

The third polyol compound has a repeating unit of a main chain having 2 or 3 carbon atoms. In other words, the third polyol compound may be a polyolefin diol or a polyalkylene diol. For example, the third polyol compound may include one or more types selected from the group consisting of polyethylene glycol and polypropylene glycol. Specifically, the third polyol compound may have a repeating unit of a main chain having 3 carbon atoms, that is, may be polypropylene glycol, and may be represented by the following Chemical Formula 1.

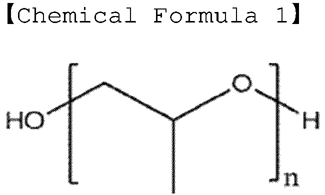

In Chemical Formula 1, n is an integer satisfying the following weight-average molecular weight.

When the third polyol compound includes a branched form in the repeating unit as in Chemical Formula 1, a network structure is formed in the urethane-based prepolymer prepared as a chain extender, which is effective in improving mechanical properties of the adhesive.

In addition, the third polyol compound may have a weight-average molecular weight (Mw) of 1,000 g/mol to 3,000 g/mol or 1,500 g/mol to 2,500 g/mol. When the weight-average molecular weight of the third polyol compound is less than the above-mentioned range, there is a problem in that shear strength and shear modulus are reduced, and when the weight-average molecular weight is greater than the above-mentioned range, a problem of inferior workability and storability may occur due to an increase in the viscosity.

The third polyol compound may have a hydroxyl group value (OHv) of 30 mgKOH/g to 80 mgKOH/g or 45 mgKOH/g to 65 mgKOH/g. When the hydroxyl group value of the third polyol compound is less than the above-mentioned range, there is a problem in that shear strength and shear modulus are reduced, and when the hydroxyl group value is greater than the above-mentioned range, a problem of inferior workability and storability may occur due to an increase in the viscosity.

In addition, the third polyol compound is used in an amount of 3 parts by weight to 15 parts by weight or 4 parts by weight to 10 parts by weight with respect to 5 parts by weight to 15 parts by weight of the first polyol compound. When the amount of the third polyol compound used in preparing the urethane-based prepolymer is less than the above-mentioned range, there is a problem in that shear strength and shear modulus are reduced, and when the amount is greater than the above-mentioned range, a problem of inferior workability and storability may occur due to an increase in the viscosity.

### <Polyolefin diol>

The urethane-based prepolymer of the present invention has an increased crosslinking property due to rigid structures in the first polyol compound to the third polyol compound, and in order to prevent workability and storage stability from declining caused by an increase in the viscosity of the prepared urethane resin, a polyolefin diol having a linear structure is included in a proper ratio to control the degree of crosslinking. Accordingly, workability may be improved by adjusting viscosity of the urethane-based adhesive composition of the present invention.

Herein, the polyolefin diol has a linear repeating unit of a main chain having 4 to 10 or 4 to 6 carbon atoms. By having a linear chemical structure with the linear repeating unit of a main chain as described above, viscosity in the composition is reduced by lowering the degree of crosslinking in the composition while maintaining mechanical properties (strength, hardness, durability, modulus) of the adhesive as they are, and as a result, storage stability and workability may be improved.

Specifically, the polyolefin diol may have a linear repeating unit of a main chain having 4 or 5 carbon atoms. That is, the polyolefin diol may be polybutadiene diol, and may include 1,2-polybutadiene diol and trans-1,4-polybutadiene diol. More specifically, the polyolefin diol may be high-cis-polybutadiene diol having a higher 1,2-polybutadiene diol content than trans-1,4-polybutadiene diol. As described above, when using high-cis-polybutadiene diol as the polyolefin diol, the degree of crosslinking increases, which is effective in obtaining excellent adhesive strength and modulus.

In addition, the polyolefin diol may have a number-average molecular weight (Mn) of 500 g/mol to 2,700 g/mol or 1,000 g/mol to 2,000 g/mol. When the number-average molecular weight of the polyolefin diol is less than the above-mentioned range, there is a problem of insufficient shear modulus of the prepared coating film, and when the number-average molecular weight is greater than the above-mentioned range, and problem of lowering hardness and modulus of the coating film may occur.

The polyolefin diol may have viscosity of 6 Pa·s to 10 Pa·s (60 poise to 100 poise) or 7 Pa·s to 9 Pa·s (70 poise to 90 poise) at 45°C. When the viscosity of the polyolefin diol at 45°C is less than the above-mentioned range, there is a problem in that hardness and modulus of the coating film are reduced, and when the viscosity is greater than the above-mentioned range, a problem of inferior workability and storability may occur due to an increase in the molecular weight.

In addition, the polyolefin diol may have a hydroxyl group value (OHv) of 60 mgKOH/g to 80 mgKOH/g or 65 mgKOH/g to 78 mgKOH/g. When the hydroxyl group value of the polyolefin diol is less than the above-mentioned range, there is a problem in that hardness and modulus of the coating film are reduced, and when the hydroxyl group value is greater than the above-mentioned range, a problem of inferior workability and storability may occur due to an increase in the molecular weight.

The polyolefin diol may have a specific gravity of 0.7 to 1.0 or 0.8 to 0.95 at 25°C. When the specific gravity of the polyolefin diol at 25°C is less than the above-mentioned range, there is a problem in that hardness and modulus of the coating film are reduced, and when the specific gravity is greater than the above-mentioned range, a problem of inferior workability and storability may occur due to an increase in the molecular weight.

In addition, the polyolefin diol is used in an amount of 1 part by weight to 5 parts by weight, 1.1 parts by weight to 4.7 parts by weight or 1.5 parts by weight to 3.0 parts by weight with respect to 5 parts by weight to 15 parts by weight of the first polyol compound. When the amount of the polyolefin diol used in preparing the urethane-based prepolymer is less than the above-mentioned range, there is a problem of insufficient hardness, tensile strength and shear modulus of the prepared coating film, and when the amount is greater than the above-mentioned range, a problem of insufficient tensile strength of the prepared coating film may occur.

### <Isocyanate-based compound>

The isocyanate-based compound may include two or more isocyanate groups per molecule. For example, the isocyanate-based compound may include one or more types selected from the group consisting of 2,4-toluene diisocyanate (2, 4-TDI), 2,6-toluene diisocyanate (2,6-TDI), 4,4'-methylene diphenyl diisocyanate (4,4'-MDI), 2,4'-diphenylmethylene diisocyanate (2,4'-MDI), 1,4-phenylene diisocyanate, 1,5-naphthalene diisocyanate, ethylene diisocyanate, propylene diisocyanate, tetramethylene diisocyanate, hexamethylene diisocyanate, isophorone diisocyanate, bis(4-isocyanatecyclohexyl)methane, 1-methyltrimethylene diisocyanate, 1,3-cyclopentene diisocyanate, 1,4-cyclopentene diisocyanate, 1,2-cyclopentene diisocyanate, 5-isocyanato-1-(isocyanatomethyl)-1,3,3-trimethyl-cyclohexane, triphenylmethane triisocyanate, tris(isocyanatephenyl) thiophosphate, 1,6,10-undecane triisocyanate and 1-isocyanato-4-[(4-isocyanatophenyl)methyl]benzene.

The isocyanate-based compound may be used in an amount of 1 part by weight to 15 parts by weight or 3 parts by weight to 10 parts by weight with respect to 5 parts by weight to 15 parts by weight of the first polyol compound. When the amount of the isocyanate-based compound used in preparing the urethane-based prepolymer is less than the above-mentioned range, there is a problem in that shear strength of the prepared coating film is reduced or adhesiveness is inferior, and when the amount is greater than the above-mentioned range, a problem of inferior storability and working life of the prepared urethane-based prepolymer may occur.

### <First plasticizer>

In addition, when preparing the urethane-based prepolymer, a first plasticizer may be additionally added during the reaction between the polyol compound and the isocyanate-based compound as described above in order to control viscosity of the composition and provide flexibility to the prepared urethane-based prepolymer.

Herein, the first plasticizer is not particularly limited as long as it is a plasticizer commonly used for a urethane-based prepolymer, and may be, for example, a phthalate-based plasticizer. For example, the first plasticizer may include one or more types selected from the group consisting of di-2-ethylhexyl phthalate, dioctyl phthalate, dibutyl phthalate, dioctyl adipate, diisodecyl phthalate, diisononyl phthalate, dipropylheptyl phthalate and butylbenzyl phthalate.

In addition, the first plasticizer may be used in an amount of 10 parts by weight to 20 parts by weight or 13 parts by weight to 18 parts by weight with respect to 5 parts by weight to 15 parts by weight of the first polyol compound. When the amount of the plasticizer used in preparing the urethane-based prepolymer is less than the above-mentioned range, a problem of inferior workability occurs due to insufficient viscosity of the prepared prepolymer, and when the amount is greater than the above-mentioned range, a problem of inferior workability may occur due to high viscosity of the prepared prepolymer.

As described above, the prepared urethane-based prepolymer may have a weight-average molecular weight (Mw) of 20,000 g/mol to 60,000 g/mol or 30,000 g/mol to 40,000 g/mol. When the weight-average molecular weight of the urethane-based prepolymer is less than the above-mentioned range, there is a problem of inferior adhesiveness of the prepared coating film, and when the weight-average molecular weight is greater than the above-mentioned range, a problem of inferior storability and workability of the prepared adhesive composition may occur.

In addition, the urethane-based prepolymer may have viscosity of 1,000 Pa·s (10,000 cps) to 3,000 Pa·s (30,000 cps) or 1,500 Pa·s (15,000) to 2,500 Pa·s (25,000 cps) at 20°C. When the viscosity of the urethane-based prepolymer at 20°C is less than the above-mentioned range, there is a problem of inferior adhesiveness of the prepared coating film, and when the viscosity is greater than the above-mentioned range, a problem of inferior storability and workability of the prepared adhesive composition may occur.

The urethane-based prepolymer may have an unreacted NCO content (NCO%) of 1.4% by weight to 2.5% by weight or 1.5% by weight to 2.0% by weight with respect to the total weight of the prepolymer. When the NCO% of the urethane-based prepolymer is less than or greater than the above-mentioned range, a problem of inferior hardness and shear modulus of the prepared coating film may occur.

In addition, the urethane-based prepolymer may be included in the composition in an amount of 47 parts by weight to 55 parts by weight or 50 parts by weight to 55 parts by weight with respect to 5 parts by weight to 15 parts by weight of the first adhesion promoter. Herein, the content of the urethane-based prepolymer may be a content with respect to 100 parts by weight of the composition. When the content of the urethane-based prepolymer is less than or greater than the above-mentioned range, a problem of inferior hardness and shear modulus of the prepared coating film may occur.

### First adhesion promoter

The first adhesion promoter is capable of improving adhesiveness between adherends of the urethane-based adhesive composition.

The first adhesion promoter is a polyisocyanate-based compound, and may specifically be a compound including two or more or three or more isocyanate groups. Specifically, the first adhesion promoter may be an isocyanurate-based compound.

In addition, the first adhesion promoter may have a weight-average molecular weight (Mw) of 100 g/mol to 1,000 g/mol, 300 g/mol to 600 g/mol or 400 g/mol to 550 g/mol. When the weight-average molecular weight of the first adhesion promoter is within the above-mentioned range, adhesive strength and shear modulus of the prepared coating film are improved. Meanwhile, when the weight-average molecular weight of the first adhesion promoter is less than the above-mentioned range, there is a problem of inferior adhesive strength for the coating film, and when the weight-average molecular weight is greater than the above-mentioned range, a problem of inferior mechanical properties may occur due to a decreased curing speed.

The first adhesion promoter may have an unreacted NCO content (NCO%) of 15% by weight to 30% by weight, 20% by weight to 28% by weight or 22% by weight to 25% by weight with respect to the total weight of the first adhesion promoter. When the NCO% of the first adhesion promoter is within the above-mentioned range, there is an effect of excellent adhesive strength. Meanwhile, when the NCO% of the first adhesion promoter is less than the above-mentioned range, there is a problem of inferior adhesive strength for the coating film, and when the NCO% is greater than the above-mentioned range, a problem of inferior mechanical properties may occur due to a decreased curing speed.

In addition, the first adhesion promoter may have viscosity of 1,000 mPa to 3,000 mPa, 1,000 mPa to 2,500 mPa or 1,500 mPa to 2,000 mPa at 25°C. When the viscosity of the first adhesion promoter at 25°C is within the above-mentioned range, there is an effect of excellent workability and discharge property. Meanwhile, when the viscosity of the first adhesion promoter at 25°C is less than the above-mentioned range, there is a problem of inferior workability, and when the viscosity is greater than the above-mentioned range, a problem of inferior storability may occur.

The first adhesion promoter may be included in the composition in an amount of 0.1 parts by weight to 10 parts by weight or 0.15 parts by weight to 5 parts by weight with respect to 100 parts by weight of the urethane-based prepolymer. When the content of the first adhesion promoter is within the above-mentioned range, there is an effect of improving adhesive strength and shear modulus of the prepared coating film. Meanwhile, when the content of the first adhesion promoter is less than the above-mentioned range, there is a problem of interior coating film hardness and shear modulus, and when the content is greater than the above-mentioned range, a problem of inferior storability may occur.

### Second adhesion promoter

The second adhesion promoter is also capable of improving adhesiveness of the urethane-based adhesive composition together with the first adhesion promoter.

The second adhesion promoter is a silane-modified compound, and may be, for example, a silane-modified urethane resin. Specifically, the second adhesion promoter may be prepared from a fourth polyol compound, an isocyanate-based compound, a silane-based compound and a second plasticizer.

Herein, the fourth polyol compound and the isocyanate-based compound react each other to form a urethane bond, and provide mechanical properties to the second adhesion promoter. In addition, the second plasticizer adjusts viscosity of the resin composition, and provides flexibility to the second adhesion promoter. In addition, the silane-based compound modifies the urethane resin produced from the reaction of the fourth polyol compound and the isocyanate-based compound, and is capable of improving adhesiveness of the cured product prepared therefrom.

The fourth polyol compound may include one or more types selected from the group consisting of a polyester polyol, a polyether polyol and a polyalkylene polyol. Specifically, the fourth polyol compound may be a polyalkylene polyol, for example, a polyalkylene diol. Herein, the alkylene may be an alkylene having 2 to 6 carbon atoms or an alkylene having 2 to 4 carbon atoms. More specifically, the fourth polyol compound may include a polyalkylene diol having a weight-average molecular weight (Mw) of 100 g/mol to 800 g/mol, 200 g/mol to 600 g/mol or 300 g/mol to 500 g/mol.

The isocyanate-based compound may be an isocyanate group-containing biuret body, and the isocyanate group-containing biuret body may be represented by the following Chemical Formula 2.

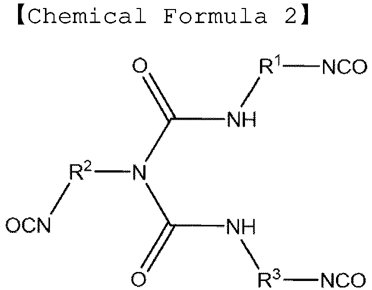

In Chemical Formula 2,
R¹ to R³ are each independently an alkylene group having 1 to 10 carbon atoms, and
R¹ to R³ may be the same as or different from each other.

Specifically, R¹ to R³ may be each independently an alkylene group having 4 to 8 carbon atoms. Herein, the alkylene group may be linear or branched. In addition, the alkylene refers to a branched, linear or cyclic divalent radical derived by removing one hydrogen atom from a carbon atom of an alkyl group. For example, the alkylene may include methylene (-CH₂-), 1,1-ethylene (-CH(CH₃)-), 1,2-ethylene (-CH₂CH₂-), 1,1-propylene (-CH(CH2CH3)-), 1,2-propylene (-CH₂CH(CH₃)-), 1,3-propylene (-CH₂CH₂CH₂-), 1,4-butylene (-CH₂CH₂CH₂CH₂-), 2,4-butylene (-CH₂(CH₃)CH₂CH₂-), 1,6-hexylene (-CH₂CH₂CH₂CH₂CH₂CH₂-), but is not limited thereto.

The silane-based compound may be a phenyl group and amine group-containing silane-based compound. Using a phenyl group and amine group-containing silane-based compound as the silane-based compound is effective in improving adhesiveness and storability of the prepared coating film.

Specifically, the silane-based compound may be a phenyl-aminoalkyl-alkoxysilane. Herein, the aminoalkyl may have 1 to 8 or 1 to 5 carbon atoms, and the alkoxy may have 1 to 5 or 1 to 3 carbon atoms.

The second plasticizer may be a phthalate-based plasticizer, and the phthalate-based plasticizer is as described in the first plasticizer of the urethane-based prepolymer.

The second adhesion promoter may have an unreacted NCO content (NCO%) of 8% by weight to 12% by weight or 9% by weight to 11% by weight with respect to the total weight of the adhesion promoter. When the NCO% of the second adhesion promoter is within the above-mentioned range, an effect of enhancing adhesive strength between the prepared coating film and a substrate is obtained. Meanwhile, when the NCO% of the second adhesion promoter is less than the above-mentioned range, there is a problem of inferior adhesion with the coating film, and when the NCO% is greater than the above-mentioned range, a problem of inferior storability may occur.

In addition, the second adhesion promoter may have viscosity of 500 Pa**·**s (5,000 cps) to 1,500 Pa·s (15,000 cps), 600 Pa·s (6,000 cps) to 1,000 Pa·s (10,000 cps) or 700 Pa·s (7,000 cps) to 900 Pa·s (9,000 cps) at 20°C. When the viscosity of the second adhesion promoter at 20°C is within the above-mentioned range, adhesive strength of the prepared coating film is improved. Meanwhile, when the viscosity of the second adhesion promoter at 20°C is less than the above-mentioned range, shear strength may be reduced, and when the viscosity is greater than the above-mentioned range, a problem of inferior workability may occur.

The second adhesion promoter may have a weight-average molecular weight (Mw) of 500 g/mol to 2,000 g/mol, 700 g/mol to 1,500 g/mol or 700 g/mol to 1,000 g/mol. When the weight-average molecular weight of the second adhesion promoter is within the above-mentioned range, there is an effect of improving adhesive strength of the prepared coating film. Meanwhile, when the weight-average molecular weight of the second adhesion promoter is less than the above-mentioned range, there is a problem of inferior hardness and shear modulus, and when the weight-average molecular weight is greater than the above-mentioned range, a problem of inferior workability and storability may occur.

In addition, the second adhesion promoter is included in the composition in an amount of 5 parts by weight to 15 parts by weight or 6 parts by weight to 10 parts by weight with respect to 100 parts by weight of the urethane-based prepolymer. When the content of the second adhesion promoter is within the above-mentioned range, there is an effect of improving adhesiveness of the prepared coating film. Meanwhile, when the content of the second adhesion promoter is less than the above-mentioned range, adhesiveness may become inferior, and when the content is greater than the above-mentioned range, storability may be reduced.

### Additive

The polyurethane composition according to the present invention may further include one or more types of additives selected from the group consisting of a third plasticizer, a pigment and a catalyst. Herein, in addition to the additives as described above, additives that may be commonly added to a urethane-based adhesive may be further included.

The additive may be included in the composition in an amount of 30 parts by weight to 60 parts by weight or 35 parts by weight to 55 parts by weight with respect to 47 parts by weight to 55 parts by weight of the urethane-based prepolymer.

The third plasticizer performs a role of controlling viscosity of the polyurethane composition, and providing flexibility to the cured product prepared therefrom. Herein, the third plasticizer may include a phthalate-based plasticizer, and is as described in the urethane-based prepolymer. In addition, the third plasticizer may be included in the composition in an amount of 10 parts by weight to 25 parts by weight or 15 parts by weight to 20 parts by weight with respect to 47 parts by weight to 55 parts by weight of the urethane-based prepolymer. When the content of the third plasticizer is less than the above-mentioned range, there is problem of inferior workability, and when the content is greater than the above-mentioned range, a problem of inferior workability and adhesiveness may occur.

The pigment performs a role of providing colors to the adhesive composition and increasing mechanical properties such as hardness for the prepared cured product. Herein, the pigment may include one or more types selected from the group consisting of carbon black, calcium carbonate, titanium dioxide, iron oxide, graphite, antimony-tin oxide, mica, carbon nanotubes, carbon fibers, barium sulfate, barytes, aluminum silicate, kaolin, kaolinite, magnesium silicate, talc, chlorite, tremolite, silica, quartz, bauxite, dolomite, feldspar, nepheline syenite, calcium silicate, wollastonite, zinc oxide, zinc phosphate, bismuth vanadate, zeolite and pyrophyllite. Specifically, the pigment may include carbon black and calcium carbonate.

The pigment may be included in the composition in an amount of 20 parts by weight to 30 parts by weight or 24 parts by weight to 28 parts by weight with respect to 47 parts by weight to 55 parts by weight of the urethane-based prepolymer. For example, the adhesive composition may include 15 parts by weight to 29 parts by weight or 20 parts by weight to 26 parts by weight of carbon black and 1 part by weight to 5 parts by weight or 2 parts by weight to 4 parts by weight of calcium carbonate with respect to 47 parts by weight to 55 parts by weight of the urethane-based prepolymer. When the content of the pigment is less than or greater than the above-mentioned range, strength of the prepared cured product is reduced, or it may be difficult to control viscosity of the adhesive composition or difficult to prepare a coating film with a required color.

The catalyst performs a role of controlling reactivity of the adhesive composition. Herein, the catalyst is not particularly limited as long as it is a catalyst usable in common urethane-based adhesives, and may include, for example, one or more types selected from the group consisting of dimethyltin dioleate, dibutyltin dimaleate, dibutyltin dilaurate, dibutyltin diacetate, dibutyltin octanoate, dibutyltin mercaptide, dioctyltin dilaurate, dioctyltin mercaptide, dioctyltin dimaleate, 4,4'-(oxydi-2,1-ethanediyl)bismorpholine and dimethyl-4-morpholine ethanamine.

The catalyst may be included in the composition in an amount of 0.05 parts by weight to 1 part by weight or 0.1 parts by weight to 0.5 parts by weight with respect to 47 parts by weight to 55 parts by weight of the first urethane-based prepolymer. When the content of the catalyst is less than the above-mentioned range, there is a problem of inferior shear strength and adhesiveness of the prepared coating film, and when the content is greater than the above-mentioned range, a problem of inferior storability and working life of composition may occur.

When the urethane-based adhesive composition according to the present invention as described above is used as an adhesive (sealant) for adhering a substrate such as glass to a painted surface of an automotive vehicle body, the primer pre-treatment process may be skipped since adhesive strength between the automotive vehicle body painted surface and/or the glass surface is excellent, and skipping the primer coating process as described above is effective in improving economic efficiency.

In addition, since the urethane-based adhesive composition is prepared by mixing the first polyol compound, the second polyol compound, the third polyol compound, the polyolefin diol and the isocyanate-based compound to prepare the urethane-based prepolymer, and then mixing the prepolymer with the first adhesion promoter and the second adhesion promoter, the preparation process is simple, curing is possible in various temperature ranges, and workability is excellent by having a proper working life. In addition, the coating film prepared from the urethane-based adhesive composition has high shear modulus (1.8 MPa to 3.0 MPa when measured at 25°C), thereby securing safety of a driver by minimizing distortion of a vehicle in the event of a vehicle collision, and achieving excellent driving performance by preventing a leaning phenomenon when cornering during high-speed driving.

Specifically, shear modulus measured at 25°C after curing the coating film prepared from the urethane-based adhesive composition for 3 hours at 175°C may be from 1.8 MPa to 3.0 MPa.

Hereinafter, the present invention will be described in more detail through examples. However, these examples are only to help understand the present invention, and the scope of the present invention is not limited to these examples in any sense.

### Synthesis Example 1. Preparation of second adhesion promoter

A glass flask was connected to a hose of a vacuum pump, and was equipped with a stirrer, a condenser and a thermometer. 0.42 parts by weight of polypropylene diol (Mw: 400 g/mol) as a polyol, 2.341 parts by weight of 1,3,5-tris(6-hydroxyhexyl)biuret triisocyanate (HDI biuret) and 0.88 parts by weight of diisononyl phthalate (DINP, second plasticizer) were introduced thereto, and the mixture was stirred for 10 minutes. After that, while paying attention to heat generation and keeping the temperature at 50°C or lower, 0.357 parts by weight of a silane-based compound (N-phenyl-gamma-aminopropyltrimethoxysilane, manufacturer: Momentive, product name: Silquest Y-9669) was uniformly added dropwise thereto for 60 minutes. After the dropping, the unreacted NCO content (NCO%) was measured every hour while maintaining the temperature at 50°C or lower, and when the measured NCO% reached 9.5% by weight to 10.5% by weight, the result was cooled to 40°C to obtain a second adhesion promoter (silane-modified urethane resin).

The prepared second adhesion promoter had viscosity of 800 Pa·s (8,000 cps) at 20°C, NCO% of 10.0% by weight, and a weight-average molecular weight of 900 g/mol.

### Experimental Example 1. Preparation of adhesive composition

### 1-1: Preparation of urethane-based prepolymer

A glass flask was connected to a hose of a vacuum pump, and was equipped with a stirrer, a condenser and a thermometer. 10.89 parts by weight of first polypropylene triol (Mw: 5,000 g/mol, OHv: 33 mgKOH/g), 10.69 parts by weight of second polypropylene triol (Mw: 3,000 g/mol, OHv: 56 mgKOH/g), 7.097 parts by weight of polypropylene diol (Mw: 2,000 g/mol, OHv: 56 mgKOH/g), 2.043 parts by weight of polybutadiene diol-1 (Mw: 1,400 g/mol, viscosity at 45°C: 7.5 Pa·s (75 poise), containing about 85 mol% of 1,2-polybutadiene diol and about 15 mol% of trans-1,4-polybutadiene diol) and 15.24 parts by weight of diisononyl phthalate (DINP, first plasticizer) were introduced thereto. After that, the temperature was slowly raised to 140°C, the result was reacted for 2 hours under vacuum and then cooled to 60°C, and 6.04 parts by weight of 4,4'-methylene diphenyl diisocyanate (4,4'-MDI) was added thereto. After checking heat generation, the unreacted NCO content (NCO%) was measured every hour while maintaining the temperature at 85°C, and when the measured NCO% reached 1.65% by weight to 1.85% by weight, the result was cooled to 40°C to obtain a urethane-based prepolymer.

The prepared urethane-based prepolymer had viscosity of 1,800 Pa·s (18,000 cps) at 20°C, NCO% of 1.70% by weight, and a weight-average molecular weight of 30,000 g/mol.

### 1-2: Preparation of adhesive composition

A vacuum pump made of stainless steel (SUS) was connected to a mixer having a jacket capable of high-viscosity rotary stirring, wall-scrubbing and heating. The urethane-based prepolymer of Experimental Example 1-1 was introduced thereto, and the mixer was heated to 60°C while stirring. After that, carbon black and calcium carbonate were introduced thereto at 60°C as a pigment, and after stirring the result for 20 minutes, the pressure was reduced for 10 minutes under vacuum of less than 20 torr to remove moisture. After stopping the vacuum, diisononyl phthalate as a plasticizer, dioctyltin dilaurate, dibutyltin mercaptide (DBTM) and 4,4'-(oxydi-2,1-ethanediyl)bismorpholine (DMDEE) as a catalyst, hexamethylene diisocyanate isocyanurate (HDI trimer) as a first adhesion promoter and the second adhesion promoter of Synthesis Example 1 were introduced thereto, and the result was stirred for 30 minutes to obtain a urethane-based adhesive composition. Herein, the content of each component was adjusted as described in Table 1.

The prepared urethane-based adhesive composition had viscosity of 2,000 Pa·s (20,000 poise) at 40°C.

### Experimental Examples 2 to 7 and Comparative Examples 8 to 15.

Urethane prepolymers were prepared in the same manner as in Experimental Example 1-1 and then urethane-based adhesive compositions were prepared in the same manner as in Experimental Example 1-2, except that the composition of each component was adjusted to a content as described in Tables 1 and 2.

**[Table 1]**

| Constitution (Unit: g) | Component | Experimental Example | | | | | | |
|---|---|---|---|---|---|---|---|---|
| 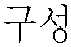 ( 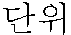 : g) | 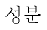 | 1 | 2 | 3 | 4 | 5 | 6 | 7 |
| Urethane-based prepolymer | First polypropylene triol (Mw: 5,000 g/mol) | 10.89 | 10.89 | 10.89 | 5.0 | 15.0 | 10.89 | 10.89 |
| Urethane-based prepolymer | Second polypropylene triol (Mw: 3,000 g/mol) | 10.69 | 10.69 | 10.69 | 10.69 | 10.69 | 6.0 | 15.0 |
| Urethane-based prepolymer | Third polypropylene triol (Mw: 1,000 g/mol) | - | - | - | - | - | - | - |
| Urethane-based prepolymer | Polypropylene diol (Mw: 2,000 g/mol) | 7.097 | 7.097 | 7.097 | 7.097 | 7.097 | 7.097 | 7.097 |
| Urethane-based prepolymer | Polybutadiene diol-1 (Mn: 1,400 g/mol, viscosity (45°C): 7.5 Pa·s (75 poise), OHv: 68-78 mgKOH/g, specific gravity (25°C): 0.88) | 2.043 | 1.1 | 4.7 | 2.043 | 2.043 | 2.043 | 2.043 |
| Urethane-based prepolymer | Polybutadiene diol-2 (Mn: 3,000 g/mol, viscosity (45°C): 13.5 Pa·s (135 poise) | - | - | - | - | - | - | - |
| Urethane-based prepolymer | 4,4'-MDI | 6.04 | 6.04 | 6.04 | 6.04 | 6.04 | 6.04 | 6.04 |
| Urethane-based prepolymer | Diisononyl phthalate | 15.24 | 15.24 | 15.24 | 15.24 | 15.24 | 15.24 | 15.24 |
| Urethane-based prepolymer | Total amount | 52 | 51.057 | 54.657 | 46.11 | 56.11 | 47.31 | 56.31 |
| Plasticizer | Diisononyl phthalate | 16.88 | 16.88 | 16.88 | 16.88 | 16.88 | 16.88 | 16.88 |
| Pigment | Carbon black | 23 | 23 | 23 | 23 | 23 | 23 | 23 |
| a pigment | CaCO₃ | 3 | 3 | 3 | 3 | 3 | 3 | 3 |
| Catalyst | DMDEE | 0.115 | 0.115 | 0.115 | 0.115 | 0.115 | 0.115 | 0.115 |
| catalyst | Dioctyltin dilaurate | 0.003 | 0.003 | 0.003 | 0.003 | 0.003 | 0.003 | 0.003 |
| catalyst | DBTM | 0.004 | 0.004 | 0.004 | 0.004 | 0.004 | 0.004 | 0.004 |
| First adhesion promoter | HDI trimer | 1 | 1 | 1 | 1 | 1 | 1 | 1 |
| Second adhesion promoter | Polypropylene diol (Mw: 400 g/mol) | 0.42 | 0.42 | 0.42 | 0.42 | 0.42 | 0.42 | 0.42 |
| second adhesion promoter | Silane-based compound | 0.357 | 0.357 | 0.357 | 0.357 | 0.357 | 0.357 | 0.357 |
| second adhesion promoter | HDI biuret | 2.341 | 2.341 | 2.341 | 2.341 | 2.341 | 2.341 | 2.341 |
| second adhesion promoter | Diisononyl phthalate | 0.88 | 0.88 | 0.88 | 0.88 | 0.88 | 0.88 | 0.88 |
| second adhesion promoter | Total amount | 3.998 | 3.998 | 3.998 | 3.998 | 3.998 | 3.998 | 3.998 |

**[Table 2]**

| Constitution (Unit: g) | Component | Comparative Examples | | | | | | | |
|---|---|---|---|---|---|---|---|---|---|
| | | 8 | 9 | 10 | 11 | 12 | 13 | 14 | 15 |
| Urethane-based prepolymer | First polypropylene triol (Mw: 5,000 g/mol) | 10.89 | 10.89 | 10.89 | 10.89 | - | 18.0 | 10.89 | 10.89 |
| | Second polypropylene triol (Mw: 3,000 g/mol) | 10.69 | 10.69 | 10.69 | 10.69 | 10.69 | 10.69 | 17.0 | 10.69 |
| | Third polypropylene triol (Mw: 1,000 g/mol) | | - | - | - | 10.89 | - | - | - |
| | Polypropylene diol (Mw: 2,000 g/mol) | 7.097 | 7.097 | 7.097 | 7.097 | 7.097 | 7.097 | 7.097 | 7.097 |
| | Polybutadiene diol-1 (Mn: 1,400 g/mol, viscosity (45°C): 7.5 Pa·s (75 poise), OHv: 68-78 mgKOH/g, specific gravity (25°C): 0.88) | | 0.7 | 5.6 | - | 2.043 | 2.043 | 2.043 | 2.043 |
| | Polybutadiene diol-2 (Mn: 3,000 g/mol, viscosity (45°C): 13.5 Pa·S (135 poise) | | - | - | 2.043 | - | - | - | - |
| | 4, 4' -MDI | 6.04 | 6.04 | 6.04 | 6.04 | 6.04 | 6.04 | 6.04 | 6.04 |
| | Diisononyl phthalate | 15.24 | 15.24 | 15.24 | 15.24 | 15.24 | 15.24 | 15.24 | 15.24 |
| | Total amount | 49.957 | 50.65 7 | 55.55 7 | 52 | 52 | 58.11 | 58.31 | 52 |
| Plasticizer | Diisononyl phthalate | 16.88 | 16.88 | 16.88 | 16.88 | 16.88 | 16.88 | 16.88 | 16.88 |
| Pigment | Carbon black | 23 | 23 | 23 | 23 | 23 | 23 | 23 | 23 |
| | CaCO₃ | 3 | 3 | 3 | 3 | 3 | 3 | 3 | 3 |
| Catalyst | DMDEE | 0.115 | 0.115 | 0.115 | 0.115 | 0.115 | 0.115 | 0.115 | 0.115 |
| | Dioctyltin dilaurate | 0.003 | 0.003 | 0.003 | 0.003 | 0.003 | 0.003 | 0.003 | 0.003 |
| | DBTM | 0.004 | 0.004 | 0.004 | 0.004 | 0.004 | 0.004 | 0.004 | 0.004 |
| First adhesion promoter | HDI trimer | 1 | 1 | 1 | 1 | 1 | 1 | 1 | 1 |
| Second adhesion promoter | Polypropylene diol (Mw: 400 g/mol) | 0.42 | 0.42 | 0.42 | 0.42 | 0.42 | 0.42 | 0.42 | 1.26 |
| | Silane-based compound | 0.357 | 0.357 | 0.357 | 0.357 | 0.357 | 0.357 | 0.357 | 1.071 |
| | HDI biuret | 2.341 | 2.341 | 2.341 | 2.341 | 2.341 | 2.341 | 2.341 | 7.023 |
| | Diisononyl phthalate | 0.88 | 0.88 | 0.88 | 0.88 | 0.88 | 0.88 | 0.88 | 2.64 |

In the following Table 3, manufactures and product names of each of the components used in Experimental Examples are shown.

**[Table 3]**

| Component | Compound name | Note |
|---|---|---|
| Carbon black | - | DBP oil absorption: 120 cm³/100 g |
| Potassium carbonate | CaCO₃ | Oil absorption (DOP): 23%, average particle size: 25 µm |
| Dioctyltin dilaurate | Cas no. 3648-18-8 | - |
| Isocyanate-based compound (when preparing second adhesion promoter) | 1,3,5-tris(6-hydroxyhexyl)biuret triisocyanate (HDI biuret) | Mw: 537 g/mol, NCO%: 23.5% by weight, viscosity at 25°C: 1,800 mPa |
| Silane-based compound | N-phenyl-gamma-aminopropyltrimethoxysilane | - |

### Test Example: Evaluation of physical properties

For the adhesive compositions of Experimental Examples, physical properties were measured in the following manner, and the results are shown in the following Table 4.

### (1) Adhesiveness (Knife Cut)

The composition was applied to the painted surface in a size of 120 mm (length)×10 mm (width)×5 mm (thickness), and cured for 7 days under a condition of 20°C and 65% relative humidity to form an adhesive layer. After that, the adhesive layer on one end of the test piece was cut with a 15 mm knife, and the substrate of the painting was held with one hand and peeled off using a knife at an angle of 30°. After that, the residual area of the unpeeled adhesive layer with respect to the total area of the adhesive layer after the curing was calculated in % to evaluate adhesiveness. Herein, adhesiveness was evaluated to be better as the residual area was larger.

### (2) Shear strength

The composition was applied and cured for 7 days under a condition of 20°C and 65% relative humidity to prepare a dogbone-shaped specimen having a thickness of 5 mm, and shear strength was measured using a UTM (universal testing machine).

### (3) Working life

The composition was applied, and then left unattended at intervals of 2 minutes, 4 minutes, 5 minutes and 6 minutes under a condition of 35°C and 90% relative humidity, and then a specimen was prepared and the time during which no peeling occurred between the adhered surface and the interface was measured.

### (4) Hardness

The composition was cured for 3 days under a condition of 20°C and 65% relative humidity to prepare a specimen having a thickness of 5 mm, and then hardness was measured using a Shore A hardness tester.

### (5) Tensile strength

The composition was cured for 7 days under a condition of 20°C and 65% relative humidity to prepare a dumbbell-shaped No. 3-type specimen having a thickness of 5 mm, and then tensile strength was measured using a UTM (universal testing machine).

### (6) Shear modulus

The composition was placed in a 250 mm×120 mm×1.4 mm (width×length×thickness) mold and cured for 3 hours at 175°C, and then shear modulus at 25°C was measured using Perkin Elmer DMA 8000.

**[Table 4]**

| | Adhesiveness | Shear strength (MPa) | Working life (Minutes) | Hardness (Shore A) | Tensile strength (MPa) | Shear modulus (MPa) |
|---|---|---|---|---|---|---|
| Goal | Greater than 90% | 3.0 MPa or greater | - | 62 to 85 | 8 MPa or greater | 1.8 MPa or greater |
| Experimental Example 1 | 100% | 5.40 | 5 | 66 | 9.12 | 2.10 |
| Experimental Example 2 | 100% | 6.10 | 5 | 66 | 8.99 | 2.00 |
| Experimental Example 3 | 100% | 5.70 | 5 | 67 | 8.23 | 2.15 |
| Experimental Example 4 | 100% | 5.90 | 5 | 62 | 8.00 | 1.80 |
| Experimental Example 5 | 100% | 6.00 | 5 | 62 | 8.10 | 1.80 |
| Experimental Example 6 | 100% | 5.10 | 5 | 63 | 8.00 | 1.90 |
| Experimental Example 7 | 100% | 4.90 | 5 | 63 | 8.10 | 1.90 |
| Comparative Example 8 | 100% | 4.30 | 5 | 63 | 7.50 | 1.85 |
| Comparative Example 9 | 100% | 3.90 | 5 | 63 | 7.20 | 1.92 |
| Comparative Example 10 | 100% | 4.20 | 4 | 72 | 6.50 | 2.25 |
| Comparative Example 11 | 100% | 4.10 | 5 | 65 | 8.10 | 1.75 |
| Comparative Example 12 | 100% | 5.10 | 5 | 62 | 8.10 | 1.58 |
| Comparative Example 13 | 90% | 3.90 | 4 | 60 | 8.10 | 1.73 |
| Comparative Example 14 | 100% | 4.25 | 5 | 55 | 8.10 | 1.85 |
| Comparative Example 15 | 100% | 2.9 | 2 | 61 | 7.90 | 1.81 |

As shown in Table 4, it was seen that the compositions of Experimental Examples 1 to 7 had a proper working life, thereby having excellent workability, and the coating film prepared therefrom had excellent adhesiveness, shear strength, shear modulus, tensile strength and hardness.

On the other hand, the coating films prepared from Comparative Example 8 including no polybutadiene diol and Comparative Example 9 including a small amount of polybutadiene diol had insufficient hardness, tensile strength and shear modulus.

In addition, the coating film prepared from Comparative Example 10 including excess polybutadiene diol had very insufficient tensile strength.

The coating film prepared from Comparative Example 11 including polybutadiene diol-2 having a high weight-average molecular weight had insufficient shear modulus.

In addition, the coating films prepared from Comparative Example 12 using third polypropylene triol having a low weight-average molecular weight instead of first polypropylene triol and Experimental Example 13 using excess first polypropylene triol had very insufficient shear modulus. Particularly, Comparative Example 13 had insufficient adhesiveness as well.

The coating film prepared from Comparative Example 14 using excess second polypropylene triol had insufficient hardness and shear modulus.

In addition, Comparative Example 15 including excess second adhesion promoter had insufficient shear strength, hardness and tensile strength, and had insufficient workability due to a short working life.

## Claims

1. A urethane-based adhesive composition, comprising:
a urethane-based prepolymer;
a first adhesion promoter; and
a second adhesion promoter,
wherein the urethane-based prepolymer is prepared from a first polyol compound, a second polyol compound, a third polyol compound, a polyolefin diol and an isocyanate-based compound;
each of the first polyol compound and the second polyol compound comprises 3 to 10 hydroxyl groups per molecule;
the first polyol compound has a larger weight-average molecular weight than the second polyol compound;
the first polyol compound has a weight-average molecular weight of 4,500 g/mol to 8,000 g/mol determined as set out in the description;
the third polyol compound comprises two hydroxyl groups per molecule and has a repeating unit of a main chain having 2 or 3 carbon atoms;
the polyolefin diol has a linear repeating unit of a main chain having 4 to 10 carbon atoms and a number-average molecular weight of 500 g/mol to 2,700 g/mol determined as set out in the description;
the urethane-based adhesive composition comprises 5 parts by weight to 15 parts by weight of the first polyol compound, 6 parts by weight to 15 parts by weight of the second polyol compound, 3 parts by weight to 15 parts by weight of the third polyol compound, and 1 part by weight to 5 parts by weight of the polyolefin diol
the first adhesion promoter is a polyisocyanate-based compound;
the second adhesion promoter is a silane-modified compound; and
the urethane-based adhesive composition comprises 5 parts by weight to 15 parts by weight of the second adhesion promoter with respect to 100 parts by weight of the urethane-based prepolymer.

2. The composition of claim 1, wherein the first polyol compound has a hydroxyl group value of 20 mgKOH/g to 45 mgKOH/g determined as set out in the description, and a repeating unit of a main chain having 2 to 10 carbon atoms, and the second polyol compound has a weight-average molecular weight of 500 g/mol to 4,300 g/mol, a hydroxyl group value of 48 g/mol to 70 mgKOH/g, and a repeating unit of a main chain having 2 to 10 carbon atoms.

3. The composition of claim 1, wherein the third polyol compound has a weight-average molecular weight of 1,000 g/mol to 3,000 g/mol, and a hydroxyl group value of 30 mgKOH/g to 80 mgKOH/g.

4. The composition of claim 1, wherein the polyolefin diol has a viscosity of 6 Pa·s (60 poise) to 10 Pa·s (100 poise) at 45 °C determined as set out in the description, and a hydroxyl group value of 60 mgKOH/g to 80 mgKOH/g.

5. The composition of claim 1, wherein the first adhesion promoter has an unreacted NCO content of 15% by weight to 30% by weight determined as set out in the description, and the second adhesion promoter has an unreacted NCO content of 8% by weight to 12% by weight.

6. The composition of claim 1, comprising 0.1 parts by weight to 10 parts by weight of the first adhesion promoter with respect to 100 parts by weight of the urethane-based prepolymer.

7. The composition of any one of claims 1 to 6, which is prepared by mixing the first polyol compound, the second polyol compound, the third polyol compound, the polyolefin diol and the isocyanate-based compound to prepare a urethane-based prepolymer; and then mixing the urethane-based prepolymer, the first adhesion promoter and the second adhesion promoter, and the specimen has shear modulus measured at 25°C of 1.8 MPa to 3.0 MPa after cured for 3 hours at at 175 °C determined as set out in the description.

## Patentansprüche

1. Urethanbasierte Klebstoffzusammensetzung, umfassend:
ein urethanbasiertes Präpolymer;
einen ersten Haftvermittler; und
einen zweiten Haftvermittler,
wobei das urethanbasierte Präpolymer aus einer ersten Polyolverbindung, einer zweiten Polyolverbindung, einer dritten Polyolverbindung, einem Polyolefindiol und einer isocyanatbasierten Verbindung hergestellt ist;
jede von der ersten Polyolverbindung und der zweiten Polyolverbindung 3 bis 10 Hydroxylgruppen pro Molekül umfasst;
die erste Polyolverbindung ein größeres gewichtsmittleres Molekulargewicht als die zweite Polyolverbindung aufweist;
die erste Polyolverbindung ein gewichtsmittleres Molekulargewicht von 4.500 g/mol bis 8.000 g/mol aufweist, bestimmt wie in der Beschreibung dargelegt;
die dritte Polyolverbindung zwei Hydroxylgruppen pro Molekül umfasst und eine Wiederholungseinheit einer Hauptkette mit 2 oder 3 Kohlenstoffatomen aufweist;
das Polyolefindiol eine lineare Wiederholungseinheit einer Hauptkette mit 4 bis 10 Kohlenstoffatomen und ein zahlenmittleres Molekulargewicht von 500 g/mol bis 2.700 g/mol, bestimmt wie in der Beschreibung dargelegt, aufweist;
die urethanbasierte Klebstoffzusammensetzung 5 Gewichtsteile bis 15 Gewichtsteile der ersten Polyolverbindung, 6 Gewichtsteile bis 15 Gewichtsteile der zweiten Polyolverbindung, 3 Gewichtsteile bis 15 Gewichtsteile der dritten Polyolverbindung und 1 Gewichtsteil bis 5 Gewichtsteile des Polyolefindiols umfasst;
der erste Haftvermittler eine polyisocyanatbasierte Verbindung ist;
der zweite Haftvermittler eine silanmodifizierte Verbindung ist; und
die urethanbasierte Klebstoffzusammensetzung 5 Gewichtsteile bis 15 Gewichtsteile des zweiten Haftvermittlers in Bezug auf 100 Gewichtsteile des urethanbasierten Präpolymers umfasst.

2. Zusammensetzung nach Anspruch 1, wobei die erste Polyolverbindung einen Hydroxylgruppenwert von 20 mgKOH/g bis 45 mgKOH/g, bestimmt wie in der Beschreibung dargelegt, und eine Wiederholungseinheit einer Hauptkette mit 2 bis 10 Kohlenstoffatomen aufweist und die zweite Polyolverbindung ein gewichtsmittleres Molekulargewicht von 500 g/mol bis 4.300 g/mol, einen Hydroxylgruppenwert von 48 g/mol bis 70 mgKOH/g und eine Wiederholungseinheit einer Hauptkette mit 2 bis 10 Kohlenstoffatomen aufweist.

3. Zusammensetzung nach Anspruch 1, wobei die dritte Polyolverbindung ein gewichtsmittleres Molekulargewicht von 1.000 g/mol bis 3.000 g/mol und einen Hydroxylgruppenwert von 30 mgKOH/g bis 80 mgKOH/g aufweist.

4. Zusammensetzung nach Anspruch 1, wobei das Polyolefindiol eine Viskosität von 6 Pa·s (60 Poise) bis 10 Pa·s (100 Poise) bei 45 °C, bestimmt wie in der Beschreibung dargelegt, und einen Hydroxylgruppenwert von 60 mgKOH/g bis 80 mgKOH/g aufweist.

5. Zusammensetzung nach Anspruch 1, wobei der erste Haftvermittler einen nicht umgesetzten NCO-Gehalt von 15 Gew.-% bis 30 Gew.-%, bestimmt wie in der Beschreibung dargelegt, aufweist und der zweite Haftvermittler einen nicht umgesetzten NCO-Gehalt von 8 Gew.-% bis 12 Gew.-% aufweist.

6. Zusammensetzung nach Anspruch 1, umfassend 0,1 Gewichtsteile bis 10 Gewichtsteile des ersten Haftvermittlers in Bezug auf 100 Gewichtsteile des urethanbasierten Präpolymers.

7. Zusammensetzung nach einem der Ansprüche 1 bis 6, die durch Folgendes hergestellt wird: Mischen der ersten Polyolverbindung, der zweiten Polyolverbindung, der dritten Polyolverbindung, des Polyolefindiols und der isocyanatbasierten Verbindung, um ein urethanbasiertes Präpolymer herzustellen;
und dann Mischen des urethanbasierten Präpolymers, des ersten Haftvermittlers und des zweiten Haftvermittlers, und wobei die Probe einen Schermodul von 1,8 MPa bis 3,0 MPa aufweist, gemessen bei 25 °C, nachdem sie für 3 Stunden bei 175 °C ausgehärtet wurde, bestimmt wie in der Beschreibung dargelegt.

## Revendications

1. Composition adhésive à base d'uréthane comprenant :
un prépolymère à base d'uréthane ;
un premier promoteur d'adhérence ; et
un second promoteur d'adhérence,
dans laquelle le prépolymère à base d'uréthane est préparé à partir d'un premier composé polyol, d'un deuxième composé polyol, d'un troisième composé polyol, d'un diol polyoléfinique et d'un composé à base d'isocyanate ;
chacun du premier composé polyol et du deuxième composé polyol comprend 3 à 10 groupes hydroxyle par molécule ;
le premier composé polyol possède un poids moléculaire moyen en poids supérieur à celui du deuxième composé polyol ;
le premier composé polyol possède un poids moléculaire moyen en poids de 4500 g/mol à 8000 g/mol déterminé comme indiqué dans la description ;
le troisième composé polyol comprend deux groupes hydroxyle par molécule et comporte une unité répétitive d'une chaîne principale comportant 2 ou 3 atomes de carbone ;
le diol polyoléfinique comporte une unité répétitive linéaire d'une chaîne principale comportant 4 à 10 atomes de carbone et un poids moléculaire moyen en nombre de 500 g/mol à 2700 g/mol déterminé comme indiqué dans la description ;
la composition adhésive à base d'uréthane comprend 5 parties en poids à 15 parties en poids du premier composé polyol, 6 parties en poids à 15 parties en poids du deuxième composé polyol, 3 parties en poids à 15 parties en poids du troisième composé polyol et 1 partie en poids à 5 parties en poids du diol polyoléfinique
le premier promoteur d'adhérence est un composé à base de polyisocyanate ;
le second promoteur d'adhérence est un composé modifié par un silane ; et
la composition adhésive à base d'uréthane comprend 5 parties en poids à 15 parties en poids du second promoteur d'adhérence par rapport à 100 parties en poids du prépolymère à base d'uréthane.

2. Composition de la revendication 1, dans laquelle le premier composé polyol possède un indice d'hydroxyle de 20 mgKOH/g à 45 mgKOH/g déterminé comme indiqué dans la description, et une unité répétitive d'une chaîne principale comportant 2 à 10 atomes de carbone, et le deuxième composé polyol possède un poids moléculaire moyen en poids de 500 g/mol à 4300 g/mol, un indice d'hydroxyle de 48 g/mol à 70 mgKOH/g, et une unité répétitive d'une chaîne principale comportant 2 à 10 atomes de carbone.

3. Composition de la revendication 1, dans laquelle le troisième composé polyol possède un poids moléculaire moyen en poids de 1000 g/mol à 3000 g/mol, et un indice d'hydroxyle de 30 mgKOH/g à 80 mgKOH/g.

4. Composition de la revendication 1, dans laquelle le diol polyoléfinique possède une viscosité de 6 Pa·s (60 poises) à 10 Pa·s (100 poises) à 45 °C déterminée comme indiqué dans la description, et un indice d'hydroxyle de 60 mgKOH/g à 80 mgKOH/g.

5. Composition de la revendication 1, dans laquelle le premier promoteur d'adhérence possède une teneur en NCO n'ayant pas réagi de 15 % en poids à 30 % en poids déterminée comme indiqué dans la description, et le second promoteur d'adhérence possède une teneur en NCO n'ayant pas réagi de 8 % en poids à 12 % en poids.

6. Composition de la revendication 1, comprenant 0,1 partie en poids à 10 parties en poids du premier promoteur d'adhérence par rapport à 100 parties en poids du prépolymère à base d'uréthane.

7. Composition de l'une quelconque des revendications 1 à 6, qui est préparée en mélangeant le premier composé polyol, le deuxième composé polyol, le troisième composé polyol, le diol polyoléfinique et le composé à base d'isocyanate pour préparer un prépolymère à base d'uréthane ; puis en mélangeant le prépolymère à base d'uréthane, le premier promoteur d'adhérence et le second promoteur d'adhérence, et l'échantillon possède un module de cisaillement mesuré à 25 °C de 1,8 MPa à 3,0 MPa après durcissement pendant 3 heures à 175 °C déterminé comme indiqué dans la description.
